(19) **Europäisches Patentamt / European Patent Office / Office européen des brevets**

(11) **EP 3 636 379 B1**

(12) # EUROPÄISCHE PATENTSCHRIFT

(45) Veröffentlichungstag und Bekanntmachung des Hinweises auf die Patenterteilung:
**10.03.2021 Patentblatt 2021/10**

(51) Int Cl.:
***B23K 26/03*** (2006.01)  ***B23K 26/38*** (2014.01)
***G01N 21/88*** (2006.01)  ***B23K 26/142*** (2014.01)

(21) Anmeldenummer: **19207676.8**

(22) Anmeldetag: **17.10.2017**

(54) **VERFAHREN UND MASCHINE ZUM SCHNEIDENDEN BEARBEITEN EINES WERKSTÜCKS**

METHOD AND DEVICE FOR CUTTING WORKPIECES

PROCÉDÉ ET MACHINE DE DÉCOUPE DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2016 DE 102016220459**

(43) Veröffentlichungstag der Anmeldung:
**15.04.2020 Patentblatt 2020/16**

(62) Dokumentnummer(n) der früheren Anmeldung(en) nach Art. 76 EPÜ:
**17784946.0 / 3 528 992**

(73) Patentinhaber: **TRUMPF Werkzeugmaschinen GmbH + Co. KG**
**71254 Ditzingen (DE)**

(72) Erfinder:
• **Mienhardt, Uwe**
**70825 Korntal- Münchingen (DE)**
• **Spiess, Martin**
**71254 Ditzingen (DE)**
• **Schönhardt, Guido**
**71254 Ditzingen (DE)**
• **Krenz, Carsten**
**70771 Leinfelden-Echterdingen (DE)**
• **Wolf, Dennis**
**71277 Rutesheim (DE)**
• **Krutzke, Michael**
**71069 Sindelfingen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**EP-A1- 3 075 485    DE-A1-102011 004 117**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zum schneidenden Bearbeiten eines insbesondere plattenartigen Werkstücks, beispielsweise eines Blechs, umfassend: Schneidendes Bearbeiten des Werkstücks entlang einer vorgegebenen Schnittkontur zum Trennen eines Werkstückteils von einem Restteil, sowie prüfen, ob beim schneidenden Bearbeiten das Werkstückteil vollständig vom Restteil getrennt wurde, wobei das Prüfen, ob das Werkstückteil vom Restteil getrennt wurde, folgende Schritte umfasst: Einstrahlen eines bevorzugt gepulsten Bearbeitungsstrahls auf das Werkstück an einer Prüfposition innerhalb der vorgegebenen Schnittkontur, Detektieren von durch eine Wechselwirkung zwischen dem Bearbeitungsstrahl und dem Werkstück erzeugter Strahlung, sowie Auswerten der detektierten Strahlung zum Prüfen, ob beim schneidenden Bearbeiten das Werkstückteil vollständig vom Restteil getrennt wurde. Die Erfindung betrifft auch eine Maschine zum schneidenden Bearbeiten eines Werkstücks, umfassend: einen Bearbeitungskopf zum Ausrichten eines Bearbeitungsstrahls auf das Werkstück, mindestens eine Bewegungseinrichtung zum Erzeugen einer Relativbewegung zwischen dem Bearbeitungskopf und dem Werkstück, eine Steuerungseinrichtung zum Ansteuern der mindestens einen Bewegungseinrichtung zum Trennen eines Werkstückteils von einem Restteil durch schneidendes Bearbeiten des Werkstücks entlang einer vorgegebenen Schnittkontur, sowie eine Auswerteeinrichtung, die ausgebildet ist zu prüfen, ob beim schneidenden Bearbeiten das Werkstückteil vollständig vom Restteil getrennt wurde.

Das schneidende Bearbeiten von plattenartigen Werkstücken, z.B. von Blechen, kann mittels thermischer oder mittels mechanischer Bearbeitung vorgenommen werden. Bei der thermischen Bearbeitung mittels eines Bearbeitungsstrahls, beispielsweise mittels eines Laserstrahls, wird ein Werkstückteil entlang einer Schnittkontur vollständig von einem Restteil getrennt. Bei dem Restteil kann es sich um ein Restwerkstück bzw. ein Restgitter des Werkstücks handeln, von dem das Werkstückteil (Gutteil) freigeschnitten wird. Alternativ kann es sich bei dem freigeschnittenen Teil um ein Restteil (Abfall) handeln, beispielsweise um einen Schneidbutzen, der ggf. aus einem Gutteil freigeschnitten wird. Bei der für das Freischneiden verwendeten Schnittkontur kann es sich um eine in sich geschlossene Schnittkontur handeln, dies ist aber nicht zwingend erforderlich. Beispielsweise kann für den Fall, dass eine Kante des zu trennenden Teils eine Außenkante des Werkstücks bildet, ein Freischneiden des Teils vom Restgitter erfolgen, ohne eine geschlossene Schnittkontur zu schneiden.

Beim schneidenden Bearbeiten, insbesondere beim Laserstrahlschneiden, ist es möglich, dass aufgrund von Parameter- und/oder Prozessfehlern Werkstückteile und/oder Restteile nicht vollständig aus dem Restgitter bzw. Restwerkstück herausgetrennt werden und somit nicht aus dem Restwerkstück bzw. aus der Werkstückebenen nach unten herausfallen, so dass diese eine Störkontur für die weitere Bearbeitung bilden. Nicht fallende Störkonturen, die z.B. durch Butzen verursacht werden, sind insbesondere an einer Maschine mit mitfahrenden Achsenelementen oder Unterstützungsschlitten während des gesamten Bearbeitungsprozesses kritisch. Maschinenelemente, insbesondere mitfahrende Maschinenelemente, können durch sich partiell unter der Werkstückebene befindende Butzen oder Gutteile beschädigt werden. Auch kann das Werkstück durch Formschluss ungewollt bewegt oder angehoben werden, sodass die Konturtreue nicht mehr gegeben ist. Es kann dadurch teilweise ein schlechter Schnitt oder ein Nichtschnitt erzeugt werden oder das Werkstück kann durch ausreichenden Kraftschluss zu den mitfahrenden Maschinenelementen aus den Klemmelementen gerissen werden, an denen das Werkstück bei der schneidenden Bearbeitung typischerweise gelagert ist.

Die WO 2015/080179 A1 löst das Problem des Entfernens eines großen Restteils bzw. Schrottteils beim Schneiden eines Lochs in ein Werkstück dadurch, dass in das Werkstück im Bereich des zu schneidenden Lochs eine Mehrzahl von Schnittlinien eingebracht wird, um das große Restteil in mehrere kleine Restteile zu zerschneiden. Das nachfolgende Schneiden des Lochs entlang der Konturlinie wird ausgehend von demjenigen Restteil vorgenommen, das dazu vorgesehen ist, als letztes in Richtung der Profillinie des Lochs herunterzufallen.

In der DE 10 2009 049 750 A1 wird ein Verfahren zum Schneiden von Material entlang einer gewünschten Schneidbahn durch Aufbringen einer Vielzahl von Laserpulsen eines modulierten Laserstrahls beschrieben. Bei einem Beispiel wird die Schneidbahn von dem modulierten Laserstrahl wiederholt durchlaufen, wobei zwischen zwei Durchläufen wenigstens ein Schneidparameter verändert wird. Auf diese Weise können erste Laserschneidpunkte, die bei einem ersten Durchlauf der Schneidbahn in das Werkstück eingebracht werden, zu zweiten Laserschneidpunkten versetzt werden, die bei einem zweiten Durchlauf der Schneidbahn in das Werkstück eingebracht werden.

In der DE 10 2011 004 117 A1 werden ein Verfahren und eine Maschine gemäß dem eingangs erwähnten Stand der Technik offenbart. Dabei wird das vollständige Freischneiden eines Werkstückteils vom Restwerkstück nach der schneidenden Bearbeitung automatisiert überprüft.

In der EP 3 075 485 A1 ist ein Laserbearbeitungsverfahren beschrieben, bei dem aus einem plattenförmigen Werkstück ein Teil entlang einer Schnittkontur ausgeschnitten wird. Nach dem schneidenden Bearbeiten wird der Bearbeitungskopf in die ausgeschnittene Kontur bewegt, um das ausgeschnittene Teil auszuschleusen, indem auf das ausgeschnittene Teil ein Hilfsgasstrahl gerichtet wird.

## Aufgabe der Erfindung

Der Erfindung liegt die Aufgabe zugrunde, ein Verfahren und eine Maschine zum schneidenden Bearbeiten eines Werkstücks bereitzustellen, bei denen die Prüfung, ob ein Werkstückteil vollständig vom Restwerkstück getrennt wurde, mit einer hohen Robustheit durchgeführt werden kann.

## Gegenstand der Erfindung

Erfindungsgemäß wird beim eingangs erwähnten Verfahren während des Einstrahlens des Bearbeitungsstrahls die Intensität des Bearbeitungsstrahls an der Prüfposition erhöht und das Einstrahlen des Bearbeitungsstrahls wird beendet, sobald beim Prüfen festgestellt wird, dass beim schneidenden Bearbeiten das Werkstückteil nicht vollständig vom Restteil getrennt wurde. Bei dem Bearbeitungsstrahl, der für die Prüfung verwendet wird, kann es sich insbesondere um einen Laserstrahl handeln. Die Art und Weise der Prüfung, ob das Werkstückteil vom Restteil getrennt wurde, entspricht im Wesentlichen dem in der eingangs zitierten DE 10 2011 004 117 A1 beschriebenen Verfahren. Bei dem gepulsten Bearbeitungsstrahl, der auf das Werkstück eingestrahlt wird, kann es sich um einen einzigen Puls des Bearbeitungsstrahls, insbesondere um einen Laserpuls, oder um eine Mehrzahl von Laserpulsen handeln. Der Bearbeitungsstrahl wird typischerweise von der gleichen Strahlquelle erzeugt, die auch den Bearbeitungsstrahl zum schneidenden Bearbeiten des Werkstücks erzeugt. Gegebenenfalls kann auch ein Bearbeitungsstrahl, der von einer anderen Strahlquelle, beispielsweise von einem Pilotlaser oder dergleichen, erzeugt wird, für die Prüfung verwendet werden.

Für den Fall, dass das geschnittene Teil (Werkstückteil oder Restteil) potentiell eine Störkontur bilden kann, wird bei der Prüfung bzw. bei dem Prüfschritt typischerweise unmittelbar nach dem schneidenden Bearbeiten entlang der Schnittkontur geprüft, ob das Werkstückteil vollständig vom Restteil getrennt wurde. Grundsätzlich können alle beim schneidenden Bearbeiten gebildeten bzw. freigeschnittenen Teile eine potentielle Störkontur für die nachfolgende schneidende Bearbeitung bilden.

Für die Prüfung wird der Bearbeitungsstrahl an einer Prüfposition innerhalb der vorgegebenen Schnittkontur, genauer gesagt innerhalb des freigeschnittenen Teils (Werkstückteil oder Restteil) auf das Werkstück eingestrahlt, um anhand der ggf. bei der Wechselwirkung erzeugten Strahlung zu detektieren, ob das Werkstückteil vollständig vom Restteil getrennt wurde. Wird das Werkstückteil vollständig von dem Restteil getrennt, wird dieses typischerweise aus der Werkstückebene nach unten ausgeschleust, d.h. der an der Prüfposition auf das Werkstück eingestrahlte Bearbeitungsstrahl strahlt auf ein innerhalb der Schnittkontur gebildetes Loch ins Leere, so dass praktisch keine Wechselwirkung zwischen dem Bearbeitungsstrahl und dem Werkstück auftritt und keine bzw. nur eine äußerst geringe Strahlungsintensität detektiert wird.

Wie weiter oben dargestellt wurde, kann die Prüfung, ob das Werkstückteil vom Restteil getrennt wurde, im Wesentlichen auf die in der eingangs zitierten DE 10 2011 004 117 A1 beschriebene Weise durchgeführt werden, d.h. ohne dass die Intensität des Bearbeitungsstrahls an der Prüfposition erhöht wird und ohne dass das Einstrahlen des Bearbeitungsstrahls beendet wird, sobald beim Prüfen festgestellt wird, dass beim schneidenden Bearbeiten das Werkstückteil nicht vollständig vom Restteil getrennt wurde. Wird bei der Prüfung während der gesamten Prüfdauer eine feste Leistung des Bearbeitungsstrahls verwendet, ist in der Regel eine aufwändige Ermittlung von Kenndaten für die jeweils bearbeiteten Werkstückmaterialien, Werkstück-Dicken, etc. sowie eine Pflege dieser Kenndaten in Tabellen bzw. in Datenbanken erforderlich. Trotz dieser vergleichsweise aufwändigen Datenermittlung kann mit einer festen Leistung des Bearbeitungsstrahls in bestimmten Fällen keine besonders hohe Robustheit des Prüfprozesses erreicht werden, wie weiter unten näher beschrieben wird.

Die Erfinder haben erkannt, dass u.a. in Abhängigkeit von der Divergenz des Bearbeitungsstrahls und der Lage des Werkstückteils relativ zum Restteil es in ungünstigen Fällen bei der Einstrahlung des Bearbeitungsstrahls lediglich zu einer Erwärmung des Materials des Werkstückteils kommt, ohne dass es bei der Wechselwirkung zwischen dem Bearbeitungsstrahl und dem Werkstückteil zu einer für eine Detektion ausreichenden Erzeugung von Strahlung kommt. Ein solcher ungünstiger Fall kann insbesondere vorliegen, wenn das Werkstückteil zwar noch mit dem Restteil verbunden ist, aber bezüglich des Restteils mehrere Millimeter nach unten abgesackt ist. In einem solchen ungünstigen Fall kann bei der Prüfung mit einer zu niedrigen Leistung des Bearbeitungsstrahls ggf. darauf geschlossen werden, dass das Werkstückteil vollständig vom Restteil getrennt wurde, ohne dass dies tatsächlich der Fall ist, wodurch es nachfolgend zu Kollisionen zwischen Bauteilen der Bearbeitungsmaschine und dem Werkstückteil kommen kann.

Wird eine zu hohe Intensität des Bearbeitungsstrahls an der Prüfposition erzeugt, kann es hingegen zu einer Markierung des Werkstücks durch den Bearbeitungsstrahl sowie ggf. zu einem Durchstechen des Bearbeitungsstrahls durch das Werkstückteil kommen. Da ggf. mindestens ein erneutes schneidendes Bearbeiten - insbesondere lateral versetzt zur Schnittkontur (s.o.) - erfolgt, um das Werkstückteil vollständig von dem Restteil zu trennen, ist es in der Regel erforderlich, die Prüfung an ein- und demselben Werkstückteil mehrfach durchzuführen. Durchsticht der Bearbeitungsstrahl das Werkstückteil, kann eine wiederholte Prüfung an derselben Prüfposition ggf. zu einem unerwünschten Ergebnis führen, da an der durchstochenen Stelle keine bei der Wechselwirkung erzeugte Strahlung mehr gemessen werden kann, obwohl das Werkstückteil noch vorhanden ist. Auch in diesem Fall wird das Vorhandensein des Werkstückteils nicht erkannt und es besteht eine Kollisionsgefahr bei nachfolgenden Prozessen. Auch wenn das Werkstückteil nicht vollständig durchstochen wird, kann bei einer zu hohen Leistung des Bearbeitungsstrahls in das Werkstückteil ein Krater eingebrannt werden, der mit massivem Funkenflug einhergeht. Der Funkenflug kann zu einer Verschmutzung der Maschine beispielsweise in Form von Spritzern auf einem Schutzglas führen, das an dem Bearbeitungskopf angebracht ist.

Bei der Erfindung wird während des Einstrahlens des Bearbeitungsstrahls die Intensität des Bearbeitungsstrahls an der Prüfposition erhöht und das Einstrahlen des Bearbeitungsstrahls wird beendet, sobald beim Prüfen festgestellt wird, dass beim schneidenden Bearbeiten das Werkstückteil nicht vollständig vom Restteil getrennt wurde. Auf diese Weise kann während des Bestrahlens einerseits eine ausreichende Wechselwirkung des Bearbeitungsstrahls mit dem Werkstück und somit eine sichere Erkennung eines nicht vollständig vom Restteil getrennten Werkstückteils erfolgen. Andererseits wird sobald erkannt wird, dass das Werkstückteil nicht vollständig vom Restteil getrennt wurde, das Einstrahlen beendet, so dass eine Kraterbildung oder das Durchstechen des Werkstücks verhindert werden kann.

Auf diese Weise kann für den Fall, dass der Abstand des Werkstückteils von der Fokusposition des Bearbeitungsstrahls bzw. zum Restteil nicht bekannt ist, das Vorhandensein des Werkstückteils sicher erkannt werden. Der Wertebereich zwischen der minimalen Intensität des Bearbeitungsstrahls an der Prüfposition und der maximalen Intensität des Bearbeitungsstrahls an der Prüfposition für den Fall, dass die Einstrahlung nicht vorzeitig beendet wird, deckt einen für die Detektion des Werkstückteils sinnvollen Wertebereich ab. Das Beenden der Einstrahlung des Bearbeitungsstrahls an die Prüfposition kann insbesondere in Echtzeit bzw. mit Hilfe einer Echtzeitschnittstelle erfolgen, welche die Strahlquelle, die zur Erzeugung des Bearbeitungsstrahls verwendet wird, praktisch instantan abschaltet.

Bei einer Variante des Verfahrens wird die Leistung des Bearbeitungsstrahls während des Einstrahlens an die Prüfposition insbesondere stufenweise erhöht. Für die Erhöhung der Intensität des Bearbeitungsstrahls an der Prüfposition stellt die Erhöhung der Leistung des Bearbeitungsstrahls eine besonders einfache Möglichkeit dar. Der Bearbeitungsstrahl wird in diesem Fall zu Beginn des Einstrahlens bzw. zu Beginn der Prüfung mit einer Leistung, die unter der maximal möglichen Leistung der Strahlquelle liegt, auf das Werkstück eingestrahlt und die Leistung wird kontinuierlich (d.h. in der Art einer Leistungsrampe) oder stufenweise erhöht. Für den Fall, dass während der gesamten Prüfdauer keine bei der Wechselwirkung erzeugte Strahlung detektiert wird, kann die Leistung der Strahlquelle während der Prüfdauer beispielsweise bis zur maximal möglichen Leistung erhöht werden. Für den Fall, dass während der Prüfdauer das Vorhandensein des Werkstückteils erkannt wird, wird das Einstrahlen des Bearbeitungsstrahls quasi in Echtzeit abgebrochen, d.h. der Zeitabschnitt der Prüfdauer mit der restlichen Leistungsrampe bzw. mit den restlichen Stufen wird nicht mehr durchgeführt.

Bei einer Weiterbildung wird der Bearbeitungsstrahl gepulst auf die Prüfposition eingestrahlt und die Leistung der Pulse des Bearbeitungsstrahls wird stufenweise erhöht. In diesem Fall kann beispielsweise mit einem fest vorgegebenen Zeittakt bzw. nach einem jeweils fest vorgegebenen Zeitintervall eine (stufenweise) Erhöhung der Leistung des Bearbeitungsstrahls erfolgen. Bei der Leistung der Pulse, die stufenweise erhöht wird, kann es sich um die mittlere Leistung der Pulse handeln, aber auch um ein anderes Maß für die Leistung der Pulse, beispielsweise um die Spitzenleistung (maximale Leistung). Der vorgegebene Zeittakt kann beispielsweise in der Größenordnung von wenigen Millisekunden liegen.

Bei einer Weiterbildung dieser Variante wird bei der stufenweisen Erhöhung die Leistung der Pulse jeweils mindestens verdoppelt. Durch eine Verdopplung oder ggf. durch eine noch stärkere Erhöhung der Leistung bei zwei jeweils aufeinander folgenden Pulsen bzw. Stufen kann die Anzahl der Pulse, die für die Abdeckung eines vergleichsweise großen Wertebereichs der Leistung des Bearbeitungsstrahls erforderlich ist, gering gehalten werden. Beispielsweise kann bei der Verwendung von z.B. fünf Pulsen bzw. Stufen mit jeweils konstanter Zeitdauer ein Wertebereich zwischen ca. 100 Watt bei der ersten Stufe und 1600 W bei der fünften Stufe abgedeckt werden.

Bei einer weiteren Variante wird die Intensität des Bearbeitungsstrahls an der Prüfposition durch eine Verschiebung der Fokusposition des Bearbeitungsstrahls in Richtung auf das Werkstück erhöht. In diesem Fall wird in der Regel die Leistung des Bearbeitungsstrahls während der Prüfdauer konstant gehalten, dies ist aber nicht zwingend erforderlich. Zu Beginn der Prüfdauer bzw. des Prüfintervalls wird die Fokusposition in Strahlrichtung des Bearbeitungsstrahls von dem Werkstück beabstandet gewählt und die Fokusposition des Bearbeitungsstrahls wird während der Prüfdauer in Richtung auf das Werkstück verschoben. Der Bearbeitungsstrahl kann am Ende der Prüfdauer auf die Oberseite des Werkstücks verschoben werden, es ist aber auch möglich, dass sich die Fokusposition in einen definierten Abstand unterhalb der Oberseite des Werkstücks befindet, beispielsweise auf Höhe der Unterseite des Werkstücks.

Je kleiner der Abstand zwischen der Fokusposition und dem Werkstückteil ist, desto kleiner ist der Durchmesser des Bearbeitungsstrahls auf dem Werkstückteil und desto größer ist die Intensität des Bearbeitungsstrahls auf dem Werkstückteil. Wie weiter oben im Zusammenhang mit der Erhöhung der Leistung des Bearbeitungsstrahls beschrieben wurde, kann auch die Verschiebung der Fokusposition und damit die Zunahme der Intensität des Bearbeitungsstrahls an der Prüfposition kontinuierlich oder stufenweise erfolgen. Für die Veränderung der Fokusposition kann der Abstand zwischen einer Fokussiereinrichtung und dem Werkstück verändert werden. Zu diesem Zweck kann beispielsweise der Abstand zwischen einem Bearbeitungskopf, in dem die Fokussiereinrichtung angeordnet ist, und dem Werkstück verändert, insbesondere verringert werden.

Bei einer Variante wird zum Prüfen, ob beim schneidenden Bearbeiten das Werkstückteil vollständig vom Restteil getrennt wurde, die Intensität der detektierten Strahlung mit einem Intensitäts-Schwellwert verglichen und das Einstrahlen des Bearbeitungsstrahls wird beendet, sobald der Intensitäts-Schwellwert überschritten wird. Mit Hilfe des weiter oben beschriebenen Detektors wird die bei der Wechselwirkung erzeugte Strahlung detektiert, die beispielsweise bei Wellenlängen im infraroten Wellenlängenbereich liegen kann. Beim Überschreiten des Intensitäts-Schwellwerts wird auf das Vorhandensein des Werkstückteils in dem Restteil erkannt und die Strahlquelle wird idealer Weise in Echtzeit abgeschaltet. Wie weiter oben beschrieben wurde, kann auf diese Weise wirksam verhindert werden, dass an dem Material eine Kraterbildung entsteht bzw. dass das Material des Werkstückteils von dem Bearbeitungsstrahl durchstochen wird.

Sofern beim Auswerten der detektierten Strahlung festgestellt wird, dass das Werkstückteil beim schneidenden Bearbeiten nicht vollständig vom Restteil getrennt wurde, kann unmittelbar nachfolgend ein erneutes schneidendes Bearbeiten durchgeführt werden. Alternativ kann zunächst eine Folgeprüfung durchgeführt und der Prüfungsschritt wiederholt werden, indem der Bearbeitungsstrahl - typischerweise an einer anderen Prüfposition - erneut auf das Werkstück eingestrahlt wird und die hierbei erzeugte Strahlung ausgewertet wird. Erst wenn auch die Folgeprüfung ergibt, dass das Werkstückteil nicht vollständig vom Restteil getrennt wurde, wird eine erneute schneidende Bearbeitung durchgeführt.

Es versteht sich, dass für den Fall, dass die Prüfung ergibt, dass das Werkstückteil vollständig von dem Restteil getrennt wurde, die Bearbeitung des Werkstücks fortgesetzt wird.

Bei einer Weiterbildung wird der Bearbeitungsstrahl an einer Prüfposition innerhalb der vorgegebenen Schnittkontur eingestrahlt, die von der vorgegebenen Schnittkontur und/oder einer Anfahrkontur um mindestens die Schnittspaltbreite der Schnittkontur beabstandet ist. Die Prüfposition sollte einen Mindestabstand zur Schnittkontur aufweisen, damit bei der Prüfung nicht unbeabsichtigter Weise der Bearbeitungsstrahl ganz oder teilweise in den Bereich der Schnittkontur eingestrahlt wird, was das Ergebnis der Prüfung verfälschen könnte. Handelt es sich bei dem freigeschnittenen Teil um ein Restteil, verläuft in diesem typischerweise auch eine von einer Einstechposition ausgehende Anfahrkontur, die zum Anfahren des Schneidprozesses benötigt wird. Auch zu der Anfahrkontur sollte bei der Prüfung ein Mindestabstand eingehalten werden, um eine Verfälschung des Prüfergebnisses zu vermeiden. Die Prüfposition sollte zudem möglichst nahe am Schnittende liegen, d.h. möglichst nahe an der Freischneideposition, damit der Abstand zwischen der Freischneideposition und der Prüfposition möglichst klein ist und die Prüfung schnell durchgeführt werden kann. Der Mindestabstand kann auch größer als die Schnittspaltbreite gewählt werden, beispielsweise wenn der Bearbeitungsstrahl einen sogenannten Pulswirkungsradius aufweist, in dem der Bearbeitungsstrahl das Material des Werkstücks außerhalb des Strahldurchmessers beeinflusst, z.B. indem der Bearbeitungsstrahl dort zu Aufwerfungen des Werkstückmaterials führt. In diesem Fall sollte der Mindestabstand zumindest der Summe aus der Schnittspaltbreite und dem Pulswirkungsradius entsprechen.

Bei einer weiteren Variante des weiter oben beschriebenen Verfahrens wird für den Fall, dass beim Prüfen festgestellt wird, dass beim schneidenden Bearbeiten das Werkstückteil nicht vollständig vom Restteil getrennt wurde, mindestens ein Gaspuls auf die Prüfposition oder ggf. auf eine beliebige andere Position innerhalb der Schnittkontur aufgebracht, um das Werkstückteil aus einer Auflageebene auszuschleusen. Der Gaspuls wird typischerweise durch eine Schneidgasdüse des Bearbeitungskopfs auf die Prüfposition aufgebracht, durch die auch der Bearbeitungsstrahl auf das Werkstück ausgerichtet wird. Es ist aber auch möglich, einen oder mehrere Gaspulse, die von einer seitlichen Gasdüse erzeugt werden, schräg auf die Prüfposition aufzubringen. Der Gaspuls kann eine Dauer in der Größenordnung von Sekunden, z.B. von zwei Sekunden, sowie einen hohen Gasdruck von z.B. mehr als ca. 10 bar oder 15 bar aufweisen. Bei dem für die Erzeugung des Gaspulses verwendeten Gas kann es sich insbesondere um ein inertes Gas, z.B. um Stickstoff, handeln. Das "Ausblasen" des Werkstückteils mit dem bzw. mit den Gaspulsen ist qualitätsneutral, d.h. die Kanten des Werkstückteils bzw. des Restwerkstücks werden nicht beeinflusst, das "Ausblasen" weist aber in der Regel eine geringere Wirksamkeit auf als das erneute schneidende Bearbeiten mit dem Bearbeitungsstrahl. Nach dem Aufbringen des bzw. der Gaspulse auf die Prüfposition kann an derselben Prüfposition erneut geprüft werden, ob das Werkstückteil aus der Auflageebene entfernt wurde. Gegebenenfalls kann der mindestens eine Gaspuls auf eine andere Position innerhalb der Schnittkontur aufgebracht werden, insbesondere falls die Wahrscheinlichkeit, dass das Werkstückteil beim Aufbringen des Gaspulses an dieser Position ausgeschleust wird, größer ist als beim Aufbringen des Gaspulses auf die Prüfposition.

Ein weiterer Aspekt der Erfindung betrifft eine Maschine der eingangs genannten Art zum schneidenden Bearbeiten eines Werkstücks, weiter umfassend: einen Detektor zur Detektion von durch eine Wechselwirkung zwischen dem Bearbeitungsstrahl und dem Werkstück erzeugter Strahlung, die beim Einstrahlen des bevorzugt gepulsten Bearbeitungsstrahls auf das Werkstück an einer Prüfposition innerhalb der vorgegebenen Schnittkontur entsteht, wobei die Auswerteeinrichtung ausgebildet ist, anhand der detektierten Strahlung zu prüfen, ob beim schneidenden Bearbeiten das Werkstückteil vollständig vom Restteil getrennt wurde, und wobei die Steuerungseinrichtung ausgebildet ist, die Intensität des Bearbeitungsstrahls an der Prüfposition zu erhöhen sowie das Einstrahlen des Bearbeitungsstrahls an die Prüfposition zu beenden, sobald beim Prüfen festgestellt wird, dass beim schneidenden Bearbeiten das Werkstückteil nicht vollständig vom Restteil getrennt wurde. Wie weiter oben in Zusammenhang mit dem Verfahren beschrieben wurde, kann auch bei der Maschine eine prozesssichere Prüfung durchgeführt werden, ob das Werkstückteil vollständig von dem Restteil getrennt wurde, selbst wenn die Lage des Werkstückteils relativ zum Restteil bzw. zur Fokusposition des Bearbeitungsstrahls nicht genau bekannt ist.

Die Steuerungseinrichtung ist ausgebildet, ein NC("numerical control")-Bearbeitungsprogramm abzuarbeiten, in dem die Schnittkonturen der zu schneidenden Teile für ein zu schneidendes Werkstück vorgegeben sind. Die Schnittkonturen werden hierbei mit Hilfe einer Kommunikation der Steuerungseinrichtung zu anderen Komponenten der Maschine, beispielswiese zur Strahlquelle, der Abstandsregelung zwischen dem Bearbeitungskopf und dem Werkstück, zur Bedienoberfläche ("human machine interface", HMI) und zur speicherprogrammierbaren Steuerung ("programmable logic controller", PLC) mit für jede vorgegebene Schnittkontur festgelegten Schneidparametern geschnitten. Nach dem Schneiden eines Teils bzw. einer Schnittkontur kann eine Wartezeit im NC-Bearbeitungsprogramm vorgesehen sein, um das Werkstück vor dem Schneiden eines weiteren Teils abkühlen zu lassen. Die weiter oben beschriebene Prüfung kann insbesondere während dieser ggf. ohnehin eingeplanten Wartezeit durchgeführt werden.

Bei dem Detektor kann es sich im einfachsten Fall um eine Fotodiode handeln, welche die Intensität der vom Werkstück zurückgestrahlten Strahlung, typischerweise bei der Wechselwirkung des Bearbeitungsstrahls mit dem Werkstück erzeugter Prozessstrahlung, Wärmestrahlung und/oder rückreflektierter bzw. gestreuter Bearbeitungsstrahlung, insbesondere Laserstrahlung, erfasst bzw. misst. Der Detektor, z.B. in Form einer Fotodiode, kann beispielsweise in der Strahlquelle zur Erzeugung des Bearbeitungsstrahls, beispielsweise eines Festkörperlasers zur Erzeugung eines Laserstrahls, angeordnet werden. Insbesondere die Detektion von am Werkstück rückreflektierter Laserstrahlung hat sich als günstig erwiesen, da in diesem Fall der Bearbeitungsstrahl mit einer gegenüber der Detektion des Prozessleuchtens bzw. der Wärmestrahlung deutlich geringeren Leistung eingestrahlt werden kann, so dass das freigeschnittene Teil bei der Prüfung nicht beschädigt wird. Letzteres ist insbesondere günstig, wenn es sich bei dem freigeschnittenen Teil um ein Gutteil handelt.

Bei einer Ausführungsform weist die Maschine eine Strahlquelle auf und die Steuerungseinrichtung ist ausgebildet bzw. programmiert, die Strahlquelle anzusteuern, die Leistung des Bearbeitungsstrahls während des Einstrahlens an die Prüfposition insbesondere stufenweise zu erhöhen. Wie weiter oben in Zusammenhang mit dem Verfahren beschrieben wurde, kann durch die Veränderung der Leistung der Strahlquelle sehr schnell eine kontinuierliche oder stufenweise Erhöhung der Intensität des Bearbeitungsstrahls an der Prüfposition erreicht werden, so dass die Prüfdauer gegenüber einer Prüfung unter Verwendung einer konstanten Leistung nicht bzw. nur geringfügig verlängert werden muss.

Bei einer weiteren Ausführungsform ist die Steuerungseinrichtung ausgebildet, die Strahlquelle anzusteuern, den Bearbeitungsstrahl gepulst auf die Prüfposition einzustrahlen und die Leistung der Pulse des gepulsten Bearbeitungsstrahls stufenweise zu erhöhen, wobei bevorzugt bei der stufenweisen Erhöhung die Leistung der Pulse jeweils mindestens verdoppelt wird. Bei einer Verdopplung der Leistung ist für das Abdecken eines großen Wertebereichs der Leistung des Laserstrahls eine vergleichsweise kleine Anzahl von Stufen erforderlich, wodurch bei identischer Dauer der jeweiligen Pulse die Prüfdauer verkürzt werden kann. An Stelle einer stufenweisen Erhöhung kann insbesondere bei der Verwendung eines "continuous wave"(cw)-Bearbeitungsstrahls die Leistung des Bearbeitungsstrahls auch kontinuierlich erhöht werden.

Bei einer weiteren Ausführungsform umfasst die Maschine zusätzlich eine in dem Bearbeitungskopf angebrachte Fokussiereinrichtung sowie eine weitere Bewegungseinrichtung zur Bewegung des Bearbeitungskopfs in einer Richtung senkrecht zum Werkstück und die Steuerungseinrichtung ist ausgebildet, zur Erhöhung der Intensität des Bearbeitungsstrahls an der Prüfposition die weitere Bewegungseinrichtung anzusteuern, um während des Einstrahlens des Bearbeitungsstrahls an die Prüfposition die Fokusposition des Bearbeitungsstrahls in Richtung auf das Werkstück zu verschieben. Je kleiner der Abstand zwischen der Fokusposition des Bearbeitungsstrahls und dem Werkstück ist, desto kleiner ist der Durchmesser des Bearbeitungsstrahls auf dem Werkstück und desto größer ist die Intensität des Bearbeitungsstrahls an der Prüfposition. Für die Erhöhung der Intensität des Bearbeitungsstrahls an der Prüfposition kann daher der Abstand zwischen der Fokusposition und dem Werkstück bzw. dem Werkstückteil kontinuierlich oder ggf. stufenweise reduziert werden. An Stelle der Verschiebung des Bearbeitungskopfs kann die Fokusposition ggf. auch auf andere Weise eingestellt werden, beispielsweise durch ein Verschieben der Fokussiereinrichtung relativ zum Bearbeitungskopf.

Bei einer weiteren Ausführungsform ist die Auswerteeinrichtung ausgebildet, zum Prüfen, ob beim schneidenden Bearbeiten das Werkstückteil vollständig vom Restteil getrennt wurde, die Intensität der detektierten Strahlung mit einem Intensitäts-Schwellwert zu vergleichen. Wie weiter oben beschrieben wurde, kann insbesondere bei der Verwendung eines nicht ortsauflösenden Detektors wie einer Fotodiode die Intensität der detektierten Strahlung im einfachsten Fall mit einem Intensitäts-Schwellwert verglichen werden. Wird der Intensitäts-Schwellwert unterschritten, befindet sich kein Werkstück-Material an der Prüfposition und das NC-Schneidprogramm wird fortgesetzt, um ein weiteres Werkstückteil zu schneiden. Liegt der Wert der Intensität der detektierten Strahlung über dem Intensitäts-Schwellwert, so wird davon ausgegangen, dass störendes Werkstückmaterial an der Prüfposition vorhanden ist, so dass das Werkstückteil nicht vollständig vom Restteil getrennt wurde. In diesem Fall wird das Einstrahlen des Bearbeitungsstrahls an die Prüfposition idealer Weise in Echtzeit beendet, wie weiter oben näher beschrieben wurde.

Wird für die Prüfung ein ortsauflösender Detektor verwendet, kann an Stelle des Vergleichs mit einem Intensitäts-Schwellwert die Auswertung der detektierten Strahlung mit Hilfe eines Bilderkennungsverfahrens an einem Bild des Werkstücks erfolgen, das beispielsweise durch eine Bearbeitungsdüse des Bearbeitungskopfs hindurch aufgenommen wird. Die Auswertung mit Hilfe eines Bilderkennungsverfahrens lässt sich insbesondere gut mit der weiter oben beschriebenen kontinuierlichen oder stufenweisen Veränderung der Fokusposition kombinieren, da diese es ermöglicht, auch unter die Oberfläche des Restteils abgesunkene Werkstückteile zu erkennen.

Es zeigen:

Fig. 1      eine schematische Darstellung eines Ausführungsbeispiels einer Maschine zum schneidenden Bearbeiten eines Werkstücks in Form einer Laserbearbeitungsmaschine,

Fig. 2      eine schematische Darstellung eines beim schneidenden Bearbeiten im Werkstück gebildeten Schnittspalts,

Fig. 3      eine Darstellung einer beim schneidenden Bearbeiten im Werkstück gebildeten vorgegebenen Schnittkontur zum Trennen eines Restteils von einem Werkstückteil,

Fig. 4a,b   schematische Darstellungen der vorgegebenen Schnittkontur von Fig. 3 sowie einer weiteren Schnittkontur, die zur vorgegebenen Schnittkontur versetzt ist,

Fig. 5      eine schematische Darstellung eines Strahlprofils eines an einer Prüfposition auf das Werkstück eingestrahlten Laserstrahls, sowie

Fig. 6      eine schematische Darstellung des zeitlichen Verlaufs der Leistung des an die Prüfposition eingestrahlten Laserstrahls sowie des zeitlichen Verlaufs der Intensität von IR-Strahlung, die bei der Wechselwirkung des eingestrahlten Laserstrahls mit dem Werkstück detektiert wird.

In der folgenden Beschreibung der Zeichnungen werden für gleiche bzw. funktionsgleiche Bauteile identische Bezugszeichen verwendet.

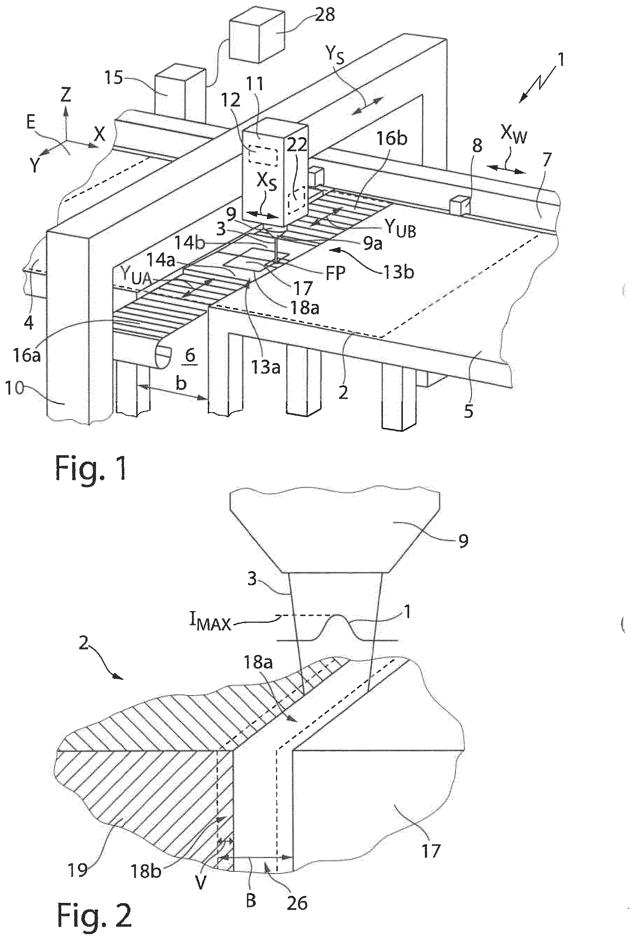

**Fig. 1** zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Laserstrahls 3. Zur schneidenden Bearbeitung des Werkstücks 2 kann an Stelle des Laserstrahls 3 auch eine andere Art von thermischem Bearbeitungsstrahl eingesetzt werden. Das Werkstück 2 liegt bei der Bearbeitung auf zwei Werkstückauflageflächen 4, 5 auf, die im gezeigten Beispiel die Oberseiten von zwei Werkstücktischen bilden und eine Auflageebene E (X-Y-Ebene eines XYZ-Koordinatensystems) zur Auflage des Werkstücks 2 definieren.

Mittels einer herkömmlichen Bewegungs- und Halteeinrichtung 7, welche einen Antrieb sowie Klemmeneinrichtungen 8 in Form von Spannpratzen zum Festhalten des Werkstücks 2 aufweist, kann das Werkstück 2 auf den Werkstückauflageflächen 4, 5 in einer ersten Bewegungsrichtung X (im Folgenden: X-Richtung) gesteuert verschoben und an eine vorgegebene Werkstückposition $X_W$ bewegt werden.

Zwischen den beiden Werkstückauflageflächen 4, 5 ist ein Spalt 6 gebildet, der sich in einer zweiten Richtung (im Folgenden: Y-Richtung) über den gesamten Verfahrweg eines Bearbeitungskopfs in Form eines Laserschneidkopfs 9 erstreckt, der den Laserstrahl 3 auf das Werkstück 2 ausrichtet und fokussiert. Der Laserschneidkopf 9 ist mittels eines als Bewegungseinrichtung dienenden angetriebenen Schlittens 11, der an einem fest stehenden Portal 10 geführt ist, innerhalb des Spalts 6 in Y-Richtung gesteuert verfahrbar. Der Laserschneidkopf 9 ist im gezeigten Beispiel innerhalb des Spalts 6 zusätzlich auch in X-Richtung gesteuert verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden. Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition $X_S$, $Y_S$ innerhalb des Spalts 6 positioniert werden. Innerhalb des Spalts 6 sind zwei Unterstützungsschlitten 13a, 13b angeordnet, die sich jeweils über die gesamte Breite b des Spalts 6 erstrecken und die in dem Spalt 6 in Y-Richtung gesteuert und unabhängig voneinander verfahrbar sind.

Zusätzlich kann der Laserschneidkopf 9 im gezeigten Beispiel mittels einer weiteren Bewegungseinrichtung 13, die auf die erste Bewegungseinrichtung in Form des Schlittens 11 aufbaut, entlang einer dritten Bewegungsrichtung Z (Schwerkraftrichtung, im Folgenden: Z-Richtung) bewegt werden, um den Abstand zwischen einer Bearbeitungsdüse 9a des Laserschneidkopfs 9 und der Oberfläche des Werkstücks 2 einzustellen bzw. um den Laserschneidkopf 9 an einer gewünschten Schneidkopfposition $Z_S$ bzw. in einem gewünschten Abstand in Z-Richtung relativ zur Werkstück-Auflageebene E zu positionieren.

Die Unterstützungsschlitten 13a, 13b können in dem Spalt 6 jeweils an eine gewünschte Position $Y_{UA}$, $Y_{UB}$ in Y-Richtung bewegt werden, um dort das Werkstück 2, genauer gesagt von dem Werkstück 2 freizuschneidende bzw. beim Bearbeiten geschnittene Werkstückteile 17, mittels einer an dem jeweiligen Unterstützungsschlitten 13a, 13b angebrachten Auflagefläche 14a, 14b zu unterstützen. Die Auflagefläche 14a, 14b eines jeweiligen Unterstützungsschlittens 13a, 13b schließt im gezeigten Fall in Z-Richtung bündig mit den Werkstückauflageflächen 4, 5 ab, d.h. die Auflageflächen 14a, 14b befinden sich in der Auflageebene E für das Werkstück 2.

Zur Steuerung der schneidenden Bearbeitung weist die Maschine 1 eine Steuerungseinrichtung 15 auf, die zur Koordinierung der Bewegungen des Werkstücks 2, des Laserschneidkopfs 9 sowie der Unterstützungsschlitten 13a, 13b dient, um eine gewünschte Werkstückposition $X_W$, eine gewünschte Schneidkopfposition $X_S$, $Y_S$, $Z_S$ sowie eine gewünschte Position $Y_{UA}$, $Y_{UB}$ der Unterstützungsschlitten 13a, 13b einzustellen, um das Schneiden einer vorgegebenen Schnittkontur 18a zu ermöglichen und das Werkstück falls erforderlich im Bereich des Spalts 6 zu unterstützen. Die Bewegung des ersten Unterstützungsschlittens 13a kann synchron oder auch unabhängig vom zweiten Unterstützungsschlitten 13b erfolgen. Die Steuerungseinrichtung 15 dient auch zur Ansteuerung einer Strahlquelle 31 in Form einer Laserquelle.

Bei dem in Fig. 1 gezeigten Beispiel ist an den in X-Richtung verlaufenden, voneinander abgewandten Außenkanten der Auflageflächen 14a, 14b jeweils ein Überdeckungselement 16a, 16b zur Abdeckung des Spalts 6 außerhalb des zwischen den Unterstützungsschlitten 13a, 13b gebildeten Schneidbereichs angebracht. Die Überdeckungselemente 16a, 16b erstrecken sich über die gesamte Breite b des Spalts 6 und werden beim Bewegen der Unterstützungsschlitten 13a, 13b in Y-Richtung mitbewegt.

Beim Freischneiden eines Werkstückteils 17 vom Werkstück 2, genauer gesagt von einem Restteil des Werkstücks 2 in Form eines Restgitters 19, wird die letzte Verbindung zwischen dem Werkstückteil 17 und dem Restgitter 19 an einer Freischneideposition FP getrennt. Für diesen Zweck können die beiden Unterstützungsschlitten 13a, 13b enger zusammengefahren werden, so dass zwischen diesen nur ein sehr geringer Abstand oder kein Abstand in Y-Richtung mehr verbleibt.

**Fig. 2** zeigt ein Detail des Werkstücks 2 von Fig. 1 in einer Schnittdarstellung, in der ein Schnittspalt 26 mit einer Schnittspaltbreite B dargestellt ist, der sich entlang der vorgegebenen Schnittkontur 18a in dem Werkstück 2 ausbildet. Die Schnittspaltbreite B des Schnittspalts 26 ist durch Prozessparameter wie Schneidgasdruck, Vorschubgeschwindigkeit, Laserleistung etc. festgelegt. Sofern das in Fig. 1 gezeigte schneidende Bearbeiten korrekt abläuft, wird entlang der vorgegebenen Schnittkontur 18a das Werkstückteil 17 an der Freischneideposition FP vollständig vom Restteil 19 getrennt. Das Werkstückteil 17 wird nachfolgend aus der Werkstückebene E entfernt, beispielsweise indem die beiden Unterstützungsschlitten 13a, 13b gegenläufig in dem Spalt 6 bewegt werden, so dass das Werkstückteil 17 nicht mehr unterstützt wird und nach unten in den Spalt 6 fällt, wo das Werkstückteil 17 mittels nicht näher beschriebener Einrichtungen aus der Maschine 1 ausgeschleust werden kann.

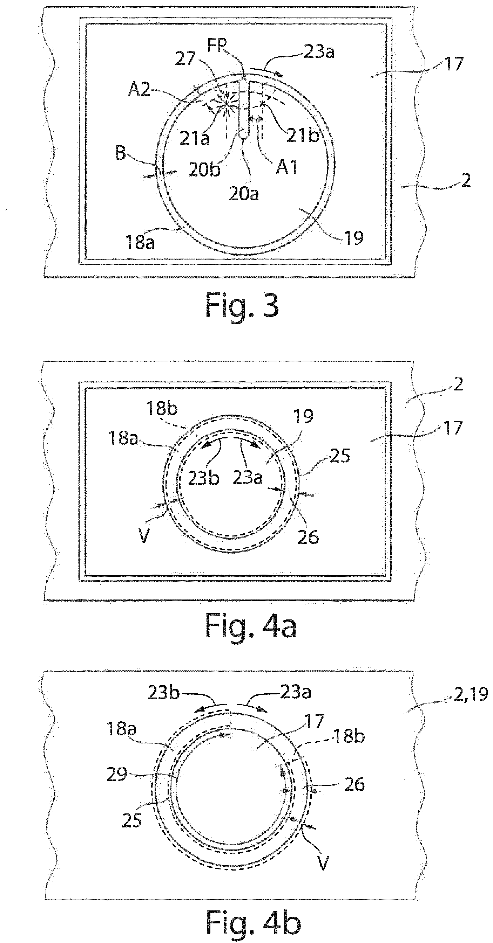

Um zu prüfen, ob beim schneidenden Bearbeiten das Werkstückteil 17 tatsächlich von dem Restteil 19 getrennt wurde, wird eine Prüfung bzw. ein Prüfschritt durchgeführt, der nachfolgend anhand von **Fig. 3** näher beschrieben wird. Fig. 3 zeigt eine Draufsicht auf das Werkstück 2 mit einem von dem (Rest-)Werkstück 2 freigetrennten Werkstückteil 17, aus dem anders als in Fig. 1 gezeigt ein kreisförmiges Restteil 19 ausgeschnitten wird, beispielsweise um in dem Werkstückteil 17 einen Durchbruch zur Befestigung einer Schraube oder dergleichen auszubilden. Im vorliegenden Beispiel ist die Schnittkontur 18a kreisförmig, es versteht sich aber, dass die Geometrie der Schnittkontur 18a grundsätzlich beliebig sein kann. In Fig. 3 ebenfalls dargestellt sind ein Einstechpunkt 20a und eine linienförmige Anfahrkontur 20b, die zum Einstechen und zum Anfahren des Laserstrahls 3 dienen, bevor dieser das Restteil 19 entlang der vorgegebenen Schnittkontur 18a von dem Werkstückteil 17 trennt. Die Bearbeitungsrichtung 23a der vorgegebenen Schnittkontur 18a verläuft in Fig. 3 beispielhaft im Uhrzeigersinn.

Um zu prüfen, ob das Restteil 19 vollständig von dem Werkstückteil 17 getrennt wurde und somit aus der Werkstückebene E nach unten gefallen ist, wird der Laserschneidkopf 9 mit Hilfe der beiden Bewegungseinrichtungen 11, 12 und/oder das Werkstück 2 mit Hilfe der Bewegungs- und Halteeinrichtung 7 derart positioniert, dass der zur Bearbeitung verwendete Laserstrahl 3 im Wesentlichen senkrecht zur Oberfläche des Werkstücks 2 ausgerichtet ist und an einer Prüfposition auf das Restteil 19 einstrahlt, wobei in Fig. 3 beispielhaft zwei mögliche Prüfpositionen 21a, 21b dargestellt sind. Befindet sich an der Prüfposition 21a, 21b ein nicht vollständig herausgetrenntes Teil, beispielsweise das in Fig. 3 gezeigte Restteil 19, tritt der Laserstrahl 3 mit dem Restteil 19 in Wechselwirkung, wodurch Strahlung 27 erzeugt wird, die in Fig. 3 beispielhaft für die erste Prüfposition 21a angedeutet ist.

Die beiden in Fig. 3 gezeigten Prüfpositionen 21a, 21b befinden sich in einem Abstand A1 von der Anfahrkontur 20b, der mindestens der Schnittspaltbreite B entspricht. Ebenso sind die Prüfpositionen 21a, 21b in einem Abstand A2 von mindestens 1 mm von der vorgegebenen Schnittkontur 18a entfernt, der mindestens der Schnittspaltbreite B entspricht, um eine Verfälschung des Messergebnisses durch das Einstrahlen eines Teils des Laserstrahls 3 in den Schnittspalt 26 bzw. in die Anfahrkontur 20b zu verhindern. Für die schnelle Durchführung des Prüfschrittes ist es günstig, wenn die jeweilige Prüfposition 21a, 21b nicht zu weit von der Freischneideposition FP entfernt ist. Für den Fall, dass der Laserstrahl 3 das Material des Werkstücks 2 beeinflusst, sollten die beiden Prüfpositionen 21a, 21b ebenfalls mindestens in einem Abstand zueinander angeordnet werden, der zumindest der Schnittspaltbreite B entspricht. Für den Fall, dass der Laserstrahl 3 einen Pulswirkungsradius aufweist, in dem dieser das Material des Werkstücks 2 auch außerhalb des Strahldurchmessers z.B. durch Materialaufwerfungen beeinflusst, sollte der Pulswirkungsradius bei der Bestimmung des jeweiligen Abstands $A1$, $A2$ berücksichtigt werden, typischerweise indem der jeweilige Abstand $A1$, $A2$ um den Pulswirkungsradius vergrößert wird.

Wie in der eingangs zitierten DE 10 2011 004 117 A1 dargestellt ist, wird die bei der Wechselwirkung mit dem Laserstrahl 3 entstehende Strahlung 27, bei der es sich um Prozesseigenleuchten, Wärmestrahlung aufgrund der Erwärmung des Werkstücks 2 und/oder um rückreflektierte Laserstrahlung handeln kann, mithilfe eines Detektors 22 (siehe Fig. 1), beispielsweise in Form einer Fotodiode, erfasst. Wurde das Restteil 19 in Fig. 3 bzw. das Werkstückteil 17 in Fig. 1 vollständig freigeschnitten, wird keine bzw. nur eine geringfügige Strahlungsintensität der bei der Wechselwirkung erzeugten Strahlung 27 vom Detektor 22 detektiert. Eine Auswerteeinrichtung 28 (vgl. Fig.1) prüft anhand der detektierten Strahlung 27, ob das Teil 17, 19 nach unten aus der Werkstückebene E herausgefallen ist. Für die Prüfung kann beispielsweise die Intensität der detektierten Strahlung 27 mit einem Intensitäts-Schwellwert verglichen werden. Liegt die Intensität der detektierten Strahlung 27 unterhalb des Intensitäts-Schwellwerts, wird davon ausgegangen, dass das Teil 17, 19 aus der Werkstückebene E nach unten gefallen ist, so dass an der Prüfposition 21a, 21b praktisch keine Wechselwirkung zwischen dem Laserstrahl 3 und dem Teil 17, 19 auftritt.

Für den Fall, dass bei der Prüfung festgestellt wird, dass das Werkstückteil 17 nicht vollständig von dem Restteil 19 getrennt wurde, kann unmittelbar ein erneutes schneidendes Bearbeiten erfolgen, wie weiter unten näher beschrieben wird. Gegebenenfalls kann vor dem erneuten schneidenden Bearbeiten nochmals geprüft werden, ob das Werkstückteil 17 vollständig vom Restteil 19 getrennt wurde, d.h. der Prüfschritt kann auf die weiter oben beschriebene Weise wiederholt werden, wobei in der Regel die Prüfposition geändert wird. Die erneute schneidende Bearbeitung wird in diesem Fall erst vorgenommen, wenn beide Prüfungsschritte ergeben, dass das Werkstückteil 17 nicht vollständig von dem Restteil 19 getrennt wurde.

Wie in **Fig. 4a,b** sowie in Fig. 2 zu erkennen ist, wird das erneute schneidende Bearbeiten entlang einer weiteren Schnittkontur 18b vorgenommen, die lateral zu der vorgegebenen Schnittkontur 18a versetzt ist, und zwar in den gezeigten Beispielen um einen konstanten Betrag V jeweils in Richtung auf das Restteil 19. Die in Fig. 4a und in Fig. 4b gezeigten Beispiele unterscheiden sich dadurch, dass in Fig. 4a wie in Fig. 3 das Restteil 19 kreisförmig, während in Fig. 4b das Gutteil 17 kreisförmig ist und aus dem Restteil 19 ausgeschnitten wird, welches in diesem Fall das Restgitter des Werkstücks 2 bildet. Wie bei dem in Fig. 3 gezeigten Beispiel sind auch bei dem in Fig. 4b gezeigten Beispiel der Einstechpunkt 20a und die Anfahrkontur 20b in dem Restteil 19 gebildet. Bei dem in Fig. 4b gezeigten Beispiel werden der bzw. die Prüfpositionen 21a, 21b ebenfalls innerhalb der geschlossenen Schnittkontur 18a, d.h. innerhalb des kreisförmigen Gutteils 17 gewählt.

Bei dem in Fig. 4a gezeigten Beispiel ist die weitere Schnittkontur 18b radial nach innen in Richtung auf das Restteil 19 versetzt, während bei dem in Fig. 4b gezeigten Beispiel die weitere Schnittkontur 18b radial nach außen in Richtung auf das Restgitter 19 versetzt ist. Der Betrag V des Versatzes der weiteren Schnittkontur 18b wird so gewählt, dass der zum Schneiden der weiteren Schnittkontur 18b auf das Werkstück 2 treffende Bearbeitungsstrahl 3 die Kante 25 des Werkstückteils 17 (Gutteils) nicht oder nur am äußeren Rand der in Fig. 2 gezeigten Verteilung der Intensität I (Gauss-Profil) trifft, sodass die Kante 25 des Werkstückteils 17 beim erneuten Schneiden nicht durch den Laserstrahl 3 verletzt wird. Der Betrag V des lateralen Versatzes kann hierbei so gewählt werden, dass der Laserstrahl 3 beim schneidenden Bearbeiten entlang der weiteren Schnittkontur 18b mit einer Intensität I auf die Kante 25 des Werkstückteils trifft, die weniger als 50 %, bevorzugt weniger als 30 %, insbesondere weniger als 20 % der maximalen Intensität $I_{MAX}$ (vgl. Fig. 2) des Strahlprofils des Laserstrahls 3 trifft das radialsymmetrisch zur in Fig. 2 angedeuteten Strahlachse des Laserstrahls 3 verläuft. Der Betrag V des lateralen Versatzes kann insbesondere bei mehr als ca. 2 % oder bei mehr als 5 % der Schnittspaltbreite B der vorgegebenen Schnittkontur 18a liegen.

Zudem wird der Betrag V des Versatzes typischerweise so gewählt, dass dieser geringer ist als die Schnittspaltbreite B des Schnittspalts 26 entlang der vorgegebenen Schnittkontur 18a. Es versteht sich, dass anders als in Fig. 4a,b dargestellt ist der Betrag des Versatzes V nicht zwingend konstant ist, sondern sich vielmehr entlang der weiteren Schnittkontur 18b verändern kann. Wie in Fig. 4a,b angedeutet ist, kann die weitere Schnittkontur 18b in entgegengesetzter Bearbeitungsrichtung 23b zu der vorgegebenen Schnittkontur 18a durchlaufen werden, es ist aber auch möglich, dass die Bearbeitungsrichtung der vorgegebenen Schnittkontur 18a und der weiteren Schnittkontur 18b sich entsprechen, so dass beide Schnittkonturen 18a, 18b im Uhrzeigersinn geschnitten werden. Auch ist es ggf. nicht zwingend erforderlich, dass die weitere Schnittkontur 18b sich über die gesamte Länge der vorgegebenen Schnittkontur 18a erstreckt, vielmehr kann die weitere Schnittkontur 18b sich nur entlang eines Abschnitts 29 der vorgegebenen Schnittkontur 18a erstrecken, wie dies in Fig. 4b dargestellt ist.

Wie in Fig. 2 zu erkennen ist, wird beim schneidenden Bearbeiten entlang der vorgegebenen Schnittkontur 18a ein Schneidgasstrahl 33 verwendet, der durch die Bearbeitungsdüse 9a des Laserschneidkopfs 9 in Richtung auf das Werkstück 2 austritt. Im gezeigten Beispiel handelt es sich bei dem Bearbeitungsprozess um einen Brennschneidprozess, d.h. der Schneidgasstrahl 33 besteht aus einem reaktiven Gas bzw. der Schneidgasstrahl 33 enthält ein reaktives Gas, im gezeigten Beispiel Sauerstoff $O_2$. Der Schneidgasstrahl 33 wird auch für das erneute schneidende Bearbeiten entlang der weiteren, lateral versetzten Schnittkontur 18b verwendet, allerdings wird in diesem Fall ein inertes Schneidgas in Form von Stickstoff $N_2$ eingesetzt. Die Verwendung eines inerten Schneidgases für das erneute schneidende Bearbeiten entlang der weiteren Schnittkontur 18b hat sich als vorteilhaft erwiesen, da einerseits ein höherer Gasdruck verwendet werden kann als dies bei einem reaktiven Gas der Fall ist und andererseits durch die Verwendung des inerten Schneidgases $N_2$ die Gefahr einer thermischen Reaktion mit dem Werkstückmaterial verringert wird.

An Stelle des erneuten schneidenden Bearbeitens des Werkstücks 2 entlang der lateral versetzten Schnittkontur 18b mittels des Bearbeitungsstrahls 3 kann die vorgegebene Schnittkontur 18a oder ggf. eine lateral versetzte weitere Kontur 18b, deren Verlauf der oben beschriebenen weiteren Schnittkontur 18b entspricht, mit dem Schneidgasstrahl 33 nachgefahren werden, ohne dass hierbei der Bearbeitungsstrahl 2 aktiviert wird. Beim Nachfahren der vorgegebenen Schnittkontur 18a bzw. der weiteren Kontur 18b wird durch das Schneidgas ein Gasdruck auf das Werkstückteil 17 ausgeübt, um dieses nach unten aus der Auflageebene E zu drücken und nach unten auszuschleusen. Beim Nachfahren der jeweiligen Kontur 18a, 18b mit dem Schneidgasstrahl 33 können typischerweise nur leicht im Restteil 19 verkantete Werkstückteile 17 zum Fallen gebracht werden, d.h. die Wirksamkeit des erneuten schneidenden Bearbeitens mit dem Bearbeitungsstrahl 3 ist größer als die Wirksamkeit des Nachfahrens der Schnittkontur 18a bzw. der weiteren Kontur 18b mittels des Schneidgasstrahls 33. Die Verwendung des Schneidgasstrahls 33 ist aber qualitätsneutral, d.h. es erfolgt keine Beeinflussung, insbesondere keine Verletzung, der Schneidkanten des Restteils 19 bzw. des Werkstückteils 17.

Nach dem erneuten schneidenden Bearbeiten entlang der weiteren Schnittkontur 18b oder dem Nachfahren der vorgegebenen Schnittkontur 18a bzw. der lateral versetzten weiteren Kontur 18b mit dem Schneidgasstrahl 33 kann eine weitere Prüfung erfolgen, ob das Werkstückteil 17 vollständig vom Restteil 19 getrennt wurde. Die erneute Prüfung kann auf die weiter oben beschriebene Weise erfolgen, es ist aber auch möglich, die Prüfung sowie ggf. die erneute Prüfung durch eine andere Sensorik, z.B. in Form einer Lichtschranke vorzunehmen, die unterhalb der Werkstückebene E angeordnet ist und die ein Fallen des Teils 17, 19 detektiert. Falls sich bei der erneuten Prüfung ergibt, dass das Teil 17, 19 nicht vollständig freigeschnitten wurde, kann ein erneutes schneidendes Bearbeiten erfolgen, an das sich ein weiterer Prüfungsschritt anschließt. Es versteht sich, dass zur Vermeidung einer Endlosschleife ein Abbruchkriterium vorgesehen werden sollte, so dass die Maschine 1 nach einer vorgegebenen Anzahl an Wiederholungen des schneidenden Bearbeitens und des Prüfens pausiert.

Fig. 5 zeigt das Strahlprofil des Laserstrahls 3, der von einer in dem Bearbeitungskopf 9 angeordneten Fokussiereinrichtung 32 (Fokussierlinse) auf das Werkstück 2 fokussiert wird. Bei dem in Fig. 5 gezeigten Beispiel ist die Position $Z_S$ des Bearbeitungskopfs 9 in Z-Richtung und somit der Abstand A zwischen dem Bearbeitungskopf 9 und dem Werkstück 2 derart gewählt, dass die Fokusposition $Z_F$ genau an der Oberseite des Werkstücks 2 liegt, die im gezeigten Beispiel (willkürlich) mit dem Koordinaten-Ursprung der Z-Achse übereinstimmt ($Z_F = 0$). An der Fokusposition $Z_F$ weist der Laserstrahl 3 seine Strahltaille bzw. seinen minimalen Strahldurchmesser d auf, der im gezeigten Beispiel bei ca. d = 150 $\mu$m liegt. Für den Radius R des Laserstrahls 3 in Z-Richtung in der Umgebung der Fokusposition $Z_F$ gilt in guter Näherung:

$$R(Z) = d/2\sqrt{1+\left(\frac{Z}{Z_R}\right)^2},$$

wobei $Z_R$ die Rayleighlänge des Laserstrahls 3 bezeichnet, die u.a. von der Wellenlänge des Laserstrahls 3 abhängt und die im gezeigten Beispiel bei ca. 1,0 mm liegt. Im gezeigten Beispiel ist das Werkstück 2 aus Stahl, beispielsweise aus Baustahl oder aus Edelstahl, gebildet. Geht man von einer Dicke D des Werkstücks 2 von beispielsweise D = 6 mm aus, ist die Querschnittsfläche des Laserstrahls 3 an der Unterseite des Werkstücks 2 im Vergleich zur Querschnittsfläche des Laserstrahls 3 an der Oberseite, d.h. im gezeigten Beispiel an der Fokusposition $Z_F$, um den Faktor 37 größer. Für den Fall, dass das nicht vollständig freigeschnittene Werkstückteil 16 auf ein Niveau in der Nähe der Unterseite des Werkstücks 2 abgesackt ist, ist die Querschnittsfläche des Laserstrahls 3 um diesen Faktor vergrößert und die Intensität $I_P$ des Laserstrahls, der auf das Werkstückteil 17 trifft, entsprechend um den Faktor 1/37 reduziert.

Wird der Laserstrahl 3 mit einer vergleichsweise geringen Leistung P auf das Werkstück 2 eingestrahlt, besteht daher die Gefahr, dass ein nach unten abgesacktes, aber noch mit dem Restteil 19 verbundenes Werkstückteil 17 aufgrund der zu geringen Wechselwirkung des Laserstrahls 3 mit dem Werkstückteil 17 nicht erkannt wird und es bei der Weiterführung des Prozesses demzufolge zu Kollisionen mit dem abgesackten Werkstückteil 17 kommt. Wird der Laserstrahl 3 hingegen mit einer vergleichsweise hohen Leistung P auf das Werkstück 2 eingestrahlt, kann in ein Werkstückteil 17, welches sich auf der Höhe der Oberseite des Werkstücks 2 befindet, ein Kratzer eingebrannt werden, was in der Regel mit massivem Funkenflug einhergeht. Der Funkenflug kann zu einer Verschmutzung der Maschine führen, beispielsweise zur Erzeugung von Spritzern auf einem an dem Bearbeitungskopf 9 vorgesehenen Schutzglas.

Bei einem vergleichsweise dünnen Werkstück 2 kann es zudem zu einem Durchstechen des Werkstücks 2 durch den Laserstrahl 3 kommen. Ein Durchstechen des Werkstücks 2 bzw. des Werkstückteils 17 führt dazu, dass nach einer erneuten schneidenden Bearbeitung - zumindest an derselben Prüfposition 21a - kein weiteres Mal eine gültige Prüfung durchgeführt werden kann, da es bei einer solchen Prüfung ggf. zu keiner Wechselwirkung mit dem Material des Werkstückteils 17 mehr kommt, auch wenn dieses noch mit dem Restteil 19 verbunden ist. Auch in diesem Fall besteht somit die Gefahr, dass ein noch mit dem Restteil 19 verbundenes Werkstückteil 17 nicht erkannt wird, was bei der Weiterführung des Prozesses zu ungewollten Kollisionen führen kann.

Wird für die Prüfung somit eine konstante Leistung P des Laserstrahls 3 verwendet, muss diese einerseits so groß sein, dass ein in die Nähe der Unterseite des Werkstücks 2 abgesunkenes Werkstückteil gerade noch erkannt wird, und die Leistung P darf andererseits nicht so groß sein, dass in ein an der Oberseite des Werkstücks 2 befindliches Werkstückteil 17 ein Krater eingebrannt wird. Bei einem vergleichsweise dicken Werkstück 2 lassen sich diese Bedingungen in der Regel nicht mit ein- und derselben Leistung P des Laserstrahls 3 erfüllen.

Um trotz der Unsicherheit der Position des Werkstückteils 17 relativ zum Restteil 19 eine robuste Prüfung durchzuführen, wird die Leistung P des im gezeigten Beispiel gepulsten Laserstrahls 3 bei der Prüfung stufenweise erhöht, wie dies beispielhaft in **Fig. 6** unten dargestellt ist. In Fig. 6 ist die Leistung P, genauer gesagt die mittlere Leistung, des gepulst eingestrahlten Laserstrahls 3 bei fünf aufeinander folgenden Pulsen P1 bis P5 dargestellt. Die mittlere Leistung der Pulse P1 bis P5 des Laserstrahls 3 wird bei der stufenweisen Erhöhung im gezeigten Beispiel jeweils verdoppelt, d.h. der erste Puls P1 hat eine mittlere Leistung von 100 W, der zweite Puls P2 hat eine mittlere Leistung von 200 W, der dritte Puls P3 hat eine mittlere Leistung von 400 W, der vierte Puls P4 hat eine mittlere Leistung von 800 W und der fünfte Puls P5 hat eine mittlere Leistung von 1600 W. Die Zeitdauer eines jeweiligen Pulses P1 bis P5 bzw. einer jeweiligen Stufe kann in der Größenordnung von wenigen Millisekunden liegen, so dass die gesamte in Fig. 6 gezeigte Pulsfolge und somit die gesamte Prüfdauer insgesamt bei nicht mehr als beispielsweise ca.

20 ms liegt.

Wie weiter oben beschrieben wurde, wird während der Einstrahlung des Laserstrahls 3 auf das Werkstück 2 mit Hilfe des Detektors 22 die Intensität $I_{IR}$ der detektierten Strahlung 27 z.B. im infraroten Wellenlängenbereich detektiert. Die Intensität $I_{IR}$ der detektierten Strahlung 27 wird während der Prüfung kontinuierlich mit einem Intensitäts-Schwellwert $I_{IR,S}$ verglichen, wie dies in Fig. 6 oben dargestellt ist. Für den Fall, dass die detektierte Intensität $I_{IR}$ der Strahlung 27 über dem Intensitäts-Schwellwert $I_{IR}$ liegt, wird das Einstrahlen des Laserstrahls 3 auf das Werkstück 2 idealer Weise in Echtzeit beendet. Für die Beendigung der Einstrahlung quasi in Echtzeit wirkt die Steuerungseinrichtung 15 über eine Echtzeit-Schnittstelle auf die Strahlquelle 31 ein, um den Laserstrahl 3 abzuschalten.

Durch die zeitnahe Abschaltung des Laserstrahls 3 wird nur die Leistung P auf das Werkstück 2 bzw. auf das Werkstückteil 17 eingestrahlt, die für die Prüfung, ob das Werkstückteil 17 vollständig vom Restteil 19 getrennt wurde, erforderlich ist. Auf diese Weise kommt es nicht zu einer ungewollten Kraterbildung oder ggf. zu einem Durchstechen des Werkstücks 2 durch den Laserstrahl 3 kommt. Bei dem in Fig. 6 gezeigten Beispiel wird bereits beim zweiten Puls P2 der Intensitäts-Schwellwert $I_{IR,S}$ überschritten, weshalb die Pulsfolge nach dem zweiten Puls P2 endet und der dritte, vierte und fünfte Puls P3, P4, P5 der Pulsfolge nicht mehr ausgeführt werden.

An Stelle der in Fig. 6 gezeigten stufenweisen Erhöhung der Leistung P des Laserstrahls 3 kann auch eine kontinuierliche Erhöhung der Leistung P des Laserstrahls erfolgen. Insbesondere kann an Stelle eines gepulsten Laserstrahls auch ein kontinuierlicher Laserstrahl 3 verwendet werden, dessen Leistung in der Art einer Rampe oder dergleichen während der Prüfdauer bis zu einer maximalen Leistung gesteigert wird.

An Stelle der in Fig. 6 dargestellten Erhöhung der Leistung P des Laserstrahls 3 während des Prüfintervalls kann die Intensität $I_P$ an der Prüfposition 21a auch dadurch erhöht werden, dass der Abstand A zwischen dem Bearbeitungskopf 9 und dem Werkstück 2 während des Einstrahlens des Laserstrahls 3 kontinuierlich oder stufenweise verändert, typischerweise verringert wird. In diesem Fall wird der Bearbeitungskopf 9 zu Beginn des Prüfzeitintervalls beispielsweise in einem Abstand A vom Werkstück 2 positioniert, bei dem sich die Fokusposition $Z_F$ oberhalb der Oberseite des Werkstücks 2 befindet. Der Abstand A zwischen dem Bearbeitungskopf 9 und dem Werkstück 2 wird anschließend verringert, bis sich die Fokusposition $Z_F$ an der Oberseite des Werkstücks 2, an einer Position zwischen der Oberseite und der Unterseite des Werkstücks 2 oder an der Unterseite des Werkstücks befindet.

Auch bei der Erhöhung der Intensität $I_P$ des Laserstrahls 3 an der Prüfposition 21a durch die Verschiebung der Fokusposition $Z_F$ des Laserstrahls 3 wird das Einstrahlen des Laserstrahls 3 auf die Prüfposition 21a beendet, sobald der Intensitäts-Schwellwert $I_{IR,S}$ überschritten wird, um eine zu starke Wechselwirkung mit dem Werkstück 2 zu vermeiden, die zu einer Kraterbildung oder ggf. zu einem Durchstechen des Werkstücks 2 führen kann. Zudem kann durch die Erhöhung der Leistung P des Laserstrahls 3 bzw. durch die Verringerung des Fokusdurchmessers auf dem Werkstück 2 während des Prüfprozesses auch die Robustheit gegenüber Schwankungen in der Beschaffenheit der Materialoberfläche des Werkstücks 2 sowie gegenüber dem Verstellen der Fokuslage relativ zum Werkstück 2 gesteigert werden. Das hier beschriebene Verfahren, bei dem die Intensität $I_P$ an der Prüfposition 21a während des Prüfens erhöht wird, kann mit dem weiter oben beschriebenen Verfahren, bei dem das erneute schneidende Bearbeiten des Werkstücks 2 entlang einer lateral zu der vorgegebenen Schnittkontur 18a versetzten weiteren Schnittkontur 18b erfolgt, in vorteilhafter Weise kombiniert werden. Gegebenenfalls kann dieses Verfahren aber auch durchgeführt werden, ohne dass beim erneuten schneidenden Bearbeiten ein lateraler Versatz der Schnittkontur 18a erfolgt.

Unabhängig davon, ob während des Prüfens die Intensität $I_P$ an der Prüfposition 21a gesteigert wird oder nicht, kann bei erneuten schneidenden Bearbeiten der Abstand A zwischen dem Laserschneidkopf 9 und dem Werkstück 2 erhöht werden, um die Robustheit bzw. die Prozesssicherheit des Schneidprozesses zu erhöhen. Dies hat sich insbesondere bei Schneidprozessen unter Verwendung einer Nebenstromdüse als günstig erwiesen, bei denen der Abstand A zwischen dem Laserschneidkopf 9 bzw. der Düse 9a und dem Werkstück 2 sehr gering ist und beispielsweise nur ca. 0,4 mm betragen kann. Für das erneute schneidende Bearbeiten kann der Abstand A beispielsweise auf 3 mm erhöht werden.

Um trotz des erhöhten Abstands A die Fokusposition $Z_F$ relativ zum Werkstück 2 konstant zu halten, wird bei der Erhöhung des Abstandes A die Fokusposition $Z_F$ in Richtung auf das Werkstück 2 verschoben. Zu diesem Zweck kann beispielsweise die Fokussiereinrichtung in Form der Fokussierlinse 32 in dem Laserschneidkopf 9 bewegt werden, wie dies in Fig. 5 durch einen Doppelpfeil angedeutet ist. Hierdurch ist sichergestellt, dass das erneute schneidende Bearbeiten im Wesentlichen mit derselben Schnittspaltbreite B durchgeführt wird, mit dem auch das schneidende Bearbeiten erfolgt.

Unabhängig davon, ob während des Prüfens die Intensität $I_P$ an der Prüfposition 21a gesteigert wird oder nicht, kann für den Fall, dass beim Prüfen erkannt wird, dass das Werkstückteil 17 nicht vollständig vom Restteil 19 getrennt wurde, an Stelle einer erneuten schneidenden Bearbeitung versucht werden, das Werkstückteil 17 aus der Auflageebene E nach unten auszuschleusen, indem ein Gaspuls 33a (vgl. Fig. 5) auf die Prüfposition 21a aufgebracht wird. Der Gaspuls 33a weist typischerweise einen hohen Gasdruck, z.B. ca. 15 bar, auf. Als (Schneid-)Gas wird zu diesem Zweck in der Regel ein inertes Gas, beispielsweise Stickstoff, verwendet. Die Dauer des Gaspulses 33a kann in der Größenordnung von einer oder ggf. von mehreren Sekunden liegen. Wie beim weiter oben beschriebenen Nachfahren der Schnittkontur 18a bzw. der weiteren Kontur 18b mit dem Schneidgasstrahl 33 ist das Aufbringen des Gaspulses 33a qualitätsneutral, d.h. dieses hat keinen Einfluss auf die Qualität der Schnittkanten. Die Wirksamkeit des Aufbringens des Gaspulses 33a zum Ausschleusen des Werkstückteils 17 aus der Auflageebene E ist allerdings geringer als dies beim erneuten schneidenden Bearbeiten mit dem Bearbeitungsstrahl 3 der Fall ist. Daher kann zunächst versucht werden, das Werkstückteil 17 durch das Aufbringen des Gasstrahls 33a auszuschleusen. Für den Fall, dass bei einer erneuten Prüfung festgestellt wird, dass das Werkstückteil 17 sich immer noch in der Auflageebene E befindet, kann ein erneutes schneidendes Bearbeiten durchgeführt werden.

Es versteht sich, dass das bzw. dass die weiter oben beschriebenen Verfahren zum Prüfen der schneidenden Bearbeitung zwar im Zusammenhang mit einer Laserschneidmaschine 1 beschrieben wurden, dass diese Verfahren aber auch an anderen Werkzeugmaschinen durchgeführt werden können, beispielsweise an Maschinen, bei denen eine Stanzfunktion mit einer Laserschneidfunktion kombiniert ist.

**Patentansprüche**

1. Verfahren zum schneidenden Bearbeiten eines Werkstücks (2), umfassend:

   Schneidendes Bearbeiten des Werkstücks (2) entlang einer vorgegebenen Schnittkontur (18a) zum Trennen eines Werkstückteils (17) von einem Restteil (19), sowie
   Prüfen, ob beim schneidenden Bearbeiten das Werkstückteil (17) vollständig vom Restteil (19) getrennt wurde,
   wobei das Prüfen, ob das Werkstückteil (17) vom Restteil (19) getrennt wurde, folgende Schritte umfasst:

   Einstrahlen eines bevorzugt gepulsten Bearbeitungsstrahls (3) auf das Werkstück (2) an eine Prüfposition (21a, 21b) innerhalb der vorgegebenen Schnittkontur (18a),
   Detektieren von durch eine Wechselwirkung zwischen dem Bearbeitungsstrahl (3) und dem Werkstück (2) erzeugter Strahlung (27), sowie
   Auswerten der detektierten Strahlung (27) zum Prüfen, ob beim schneidenden Bearbeiten das Werkstückteil (17) vollständig vom Restteil (19) getrennt wurde,
   **dadurch gekennzeichnet,**
   **dass** während des Einstrahlens des Bearbeitungsstrahls (3) die Intensität ($I_P$) des Bearbeitungsstrahls (3) an der Prüfposition (21a, 21b) erhöht wird und das Einstrahlen des Bearbeitungsstrahls (3) beendet wird, sobald beim Prüfen festgestellt wird, dass beim schneidenden Bearbeiten das Werkstückteil (17) nicht vollständig vom Restteil (19) getrennt wurde.

2. Verfahren nach Anspruch 1, bei dem die Leistung (P) des Bearbeitungsstrahls (3) während des Einstrahlens an die Prüfposition (21a, 21b) insbesondere stufenweise erhöht wird.

3. Verfahren nach Anspruch 2, bei dem der Bearbeitungsstrahl (3) gepulst auf die Prüfposition (21a, 21b) eingestrahlt wird und bei dem die Leistung der Pulse (P1 bis P5) stufenweise erhöht wird.

4. Verfahren nach Anspruch 3, bei dem bei der stufenweisen Erhöhung die Leistung der Pulse (P1 bis P5) jeweils mindestens verdoppelt wird.

5. Verfahren nach einem der vorhergehenden Ansprüche, bei dem die Intensität ($I_P$) des Bearbeitungsstrahls (3) an der Prüfposition (21a, 21b) durch eine Verschiebung der Fokusposition ($Z_F$) des Bearbeitungsstrahls (3) in Richtung auf das Werkstück (2) erhöht wird.

6. Verfahren nach einem der vorhergehenden Ansprüche, bei dem zum Prüfen, ob beim schneidenden Bearbeiten das Werkstückteil (17) vollständig vom Restteil (19) getrennt wurde, die Intensität ($I_{IR}$) der detektierten Strahlung (27) mit einem Intensitäts-Schwellwert ($I_{IR,S}$) verglichen wird und bei dem das Einstrahlen des Bearbeitungsstrahls (3) beendet wird, sobald der Intensitäts-Schwellwert ($I_{IR,S}$) überschritten wird.

7. Verfahren nach einem der vorhergehenden Ansprüche, bei dem der Bearbeitungsstrahl (3) an einer Prüfposition (21a, 21b) innerhalb der vorgegebenen Schnittkontur (18a) eingestrahlt wird, die von der vorgegebenen Schnittkontur (18a) und/oder einer Anfahrkontur (20b) um mindestens die Schnittspaltbreite (B) der Schnittkontur (18a) beabstandet ist.

8. Verfahren nach einem der vorhergehenden Ansprüche, weiter umfassend: Aufbringen eines Gaspulses (33a) auf die Prüfposition (21a, 21b) zum Ausschleusen des Werkstückteils (17) aus einer Auflageebene (E), wenn beim Prüfen festgestellt wird, dass beim schneidenden Bearbeiten das Werkstückteil (17) nicht vollständig vom Restteil (19) getrennt wurde.

9. Maschine zum schneidenden Bearbeiten eines Werkstücks (2), umfassend:

einen Bearbeitungskopf (9) zum Ausrichten eines Bearbeitungsstrahls (3) auf das Werkstück (2),
mindestens eine Bewegungseinrichtung (7, 11, 12) zum Erzeugen einer Relativbewegung zwischen dem Bearbeitungskopf (9) und dem Werkstück (2),
sowie
eine Steuerungseinrichtung (15) zum Ansteuern der mindestens einen Bewegungseinrichtung (7, 11, 12) zum Trennen eines Werkstückteils (17) von einem Restteil (19) durch schneidendes Bearbeiten des Werkstücks (2) entlang einer vorgegebenen Schnittkontur (18a),
eine Auswerteeinrichtung (28), die ausgebildet ist zu prüfen, ob beim schneidenden Bearbeiten das Werkstückteil (17) vollständig vom Restteil (19) getrennt wurde,
weiter umfassend:

einen Detektor (22) zur Detektion von durch eine Wechselwirkung zwischen dem Bearbeitungsstrahl (3) und dem Werkstück (2) erzeugter Strahlung (27), die beim Einstrahlen des bevorzugt gepulsten Bearbeitungsstrahls (3) auf das Werkstück (2) an einer Prüfposition (21a, 21b) innerhalb der vorgegebenen Schnittkontur (18a) entsteht, wobei die Auswerteeinrichtung (28) ausgebildet ist, anhand der detektierten Strahlung (27) zu prüfen, ob beim schneidenden Bearbeiten das Werkstückteil (17) vollständig vom Restteil (19) getrennt wurde, **dadurch gekennzeichnet, dass**
die Steuerungseinrichtung (15) ausgebildet ist, die Intensität ($I_P$) des Bearbeitungsstrahls (3) an der Prüfposition (21a, 21b) zu erhöhen und das Einstrahlen des Bearbeitungsstrahls (3) an die Prüfposition (21a, 21b) zu beenden, sobald beim Prüfen festgestellt wird, dass beim schneidenden Bearbeiten das Werkstückteil (17) nicht vollständig vom Restteil (19) getrennt wurde.

10. Maschine nach Anspruch 9, welche eine Strahlquelle (31) aufweist und bei der die Steuerungseinrichtung (15) ausgebildet ist, die Strahlquelle (31) anzusteuern, die Leistung (P) des Bearbeitungsstrahls (3) während des Einstrahlens an die Prüfposition (21a, 21b) insbesondere stufenweise zu erhöhen.

11. Maschine nach Anspruch 10, bei der die Steuerungseinrichtung (15) ausgebildet ist, die Strahlquelle (31) anzusteuern, den Bearbeitungsstrahl (3) gepulst auf die Prüfposition (21a, 21b) einzustrahlen und die Leistung der Pulse (P1 bis P5) des gepulsten Bearbeitungsstrahls (3) stufenweise zu erhöhen, wobei bevorzugt bei der stufenweisen Erhöhung die Leistung der Pulse (P1 bis P5) jeweils mindestens verdoppelt wird.

**12.** Maschine nach einem der Ansprüche 9 bis 11, weiter umfassend: eine in dem Bearbeitungskopf (9) angebrachte Fokussiereinrichtung (32) sowie eine weitere Bewegungseinrichtung (30) zur Bewegung des Bearbeitungskopfs (9) in einer Richtung (Z) senkrecht zum Werkstück (2), wobei die Steuerungseinrichtung (15) ausgebildet ist, zur Erhöhung der Intensität ($I_P$) des Bearbeitungsstrahls (3) an der Prüfposition (21a, 21b) die weitere Bewegungseinrichtung (30) anzusteuern, um während des Einstrahlens des Bearbeitungsstrahls (3) an die Prüfposition (21a, 21b) die Fokusposition ($Z_F$) des Bearbeitungsstrahls (3) Richtung auf das Werkstück (2) zu verschieben.

**13.** Maschine nach einem der Ansprüche 9 bis 12, bei der die Auswerteeinrichtung (28) ausgebildet ist, zum Prüfen, ob beim schneidenden Bearbeiten das Werkstückteil (17) vollständig vom Restteil (19) getrennt wurde, die Intensität ($I_{IR}$) der detektierten Strahlung (27) mit einem Intensitäts-Schwellwert ($I_{IR,S}$) zu vergleichen.

**Claims**

**1.** Method for cutting a workpiece (2), comprising: cutting the workpiece (2) along a predefined cutting contour (18a) to separate a workpiece part (17) from a scrap part (19),
and
checking whether the workpiece part (17) has been fully separated from the scrap part (19) during the cutting,
wherein the check as to whether the workpiece part (17) has been separated from the scrap part (19) comprises the following steps:

irradiating the workpiece with a preferably pulsed machining beam (3) at a check position (21a, 21b) within the predefined cutting contour (18a),
detecting radiation (27) generated by interaction between the machining beam (3) and the workpiece (2), and
evaluating the detected radiation (27) to check whether the workpiece part (17) has been fully separated from the scrap part (19) during the cutting,
**characterised in that**
during the irradiation with the machining beam (3), the intensity ($I_P$) of the machining beam (3) at the check position (21a, 21b) is increased and the irradiation with the machining beam (3) is stopped as soon as it is found during the check that the workpiece part (17) has not been fully separated from the scrap part (19) during the cutting.

**2.** Method according to claim 1, wherein the power (P) of the machining beam (3) is increased, in particular in steps, during irradiation of the check position (21a, 21b).

**3.** Method according to claim 2, wherein the check position (21a, 21b) is irradiated with the machining beam (3) in a pulsed manner and wherein the power of the pulses (P1 to P5) is increased in steps.

**4.** Method according to claim 3, wherein the power of the pulses (P1 to P5) is at least doubled each time during the stepped increase.

**5.** Method according to any of the preceding claims, wherein the intensity ($I_P$) of the machining beam (3) at the check position (21a, 21b) is increased by shifting the focus position ($Z_F$) of the machining beam (3) towards the workpiece (2).

**6.** Method according to any of the preceding claims, wherein to check whether the workpiece part (17) has been fully separated from the scrap part (19) during the cutting, the intensity ($I_{IR}$) of the detected radiation (27) is compared with an intensity threshold value ($I_{IR,S}$) and wherein the irradiation with the machining beam (3) is stopped as soon as the intensity threshold value ($I_{IR,S}$) is exceeded.

**7.** Method according to any of the preceding claims, wherein a check position (21a, 21b) within the predefined cutting contour (18) that is spaced apart from the predefined cutting contour (18a) and/or from a starting contour (20b) by at least the cutting gap width (B) of the cutting contour (18a) is irradiated with the machining beam (3).

**8.** Method according to any of the preceding claims, further comprising: applying a gas pulse (33a) to the check position (21a, 21b) in order to discharge the workpiece part (17) from a bearing plane (E) if it is found during the check that the workpiece part (17) has not been fully separated from the scrap part (19) during the cutting.

**9.** Machine (1) for cutting a workpiece (2), comprising:

a machining head (9) for directing a machining beam (3) to the workpiece (2),
at least one movement device (7, 11, 12) for generating a relative movement between the machining head (9) and the workpiece (2), and
a control device (15) for controlling the at least one movement device (7, 11, 12) to separate a workpiece part (17) from a scrap part (19) by cutting the workpiece (2) along a predefined cutting contour (18a),

an evaluation device (28) designed to check whether the workpiece part (17) has been fully separated from the scrap part (19) during the cutting,

further comprising:

a detector (22) for detecting radiation (27) that is generated by interaction between the machining beam (3) and the workpiece (2) being produced during irradiation of the workpiece (2) with the preferably pulsed machining beam (3) at a check position (21a, 21b) within the predefined cutting contour (18a),

wherein the control device (28) is designed to check whether the workpiece part (17) has been fully separated from the scrap part (19) during the cutting on the basis of the detected radiation (27), **characterized in that**

the control device (15) is designed to increase the intensity ($I_P$) of the machining beam (3) at the check position (21a, 21b) and to stop the irradiation of the check position (21a, 21b) with the machining beam (3) as soon as it is found during the check that the workpiece part (17) has not been fully separated from the scrap part (19) during the cutting.

10. Machine according to claim 9, comprising a beam source (31) and wherein the control device (15) is designed to control the beam source (31) to increase the power (P) of the machining beam (3), in particular in steps, during irradiation of the check position (21a, 21b).

11. Machine according to claim 10, wherein the control device (15) is designed to control the beam source (31) to irradiate the check position (21a, 21b) with the machining beam (3) in a pulsed manner and to increase the power of the pulses (P1 to P5) of the pulsed machining beam (3) in steps, wherein preferably the power of the pulses (P1 to P5) is at least doubled each time during the stepped increase.

12. Machine according to any of claims 9 to 11, further comprising: a focusing device (32) arranged in the machining head (9) and an additional movement device (30) for moving the machining head (9) in a direction (Z) perpendicular to the workpiece (2), wherein, in order to increase the intensity ($I_P$) of the machining beam (3) at the check position (21a, 21b), the control device (15) is designed to control the additional movement device (30) to shift the focus position ($Z_F$) of the machining beam (3) towards the workpiece (2) during irradiation of the check position (21a, 21b) with the machining beam (3).

13. Machine according to any of claims 9 to 12, wherein, in order to check whether the workpiece part (17) has been fully separated from the scrap part (19) during the cutting, the evaluation device (28) is designed to compare the intensity ($I_{IR}$) of the detected radiation (27) with an intensity threshold value ($I_{IR,S}$).

**Revendications**

1. Procédé d'usinage d'une pièce (2) par découpe, le procédé comprenant :

usiner par découpe la pièce (2) suivant un contour de coupe (18a) prédéterminé pour séparer une partie de pièce (17) d'une partie restante (19), et

vérifier si la partie de pièce (17) a été complètement séparée de la partie restante (19) pendant l'usinage par découpe,

la vérification du fait que la partie de pièce (17) a été séparée de la partie restante (19) comprenant les étapes suivantes :

irradier la pièce (2) avec un faisceau d'usinage (3), de préférence pulsé, à une position de vérification (21a, 21b) à l'intérieur du contour de coupe (18a) prédéterminé,

détecter le rayonnement (27) généré par une interaction entre le faisceau d'usinage (3) et la pièce (2), et

évaluer le rayonnement détecté (27) pour vérifier si la partie de pièce (17) a été complètement séparée de la partie restante (19) pendant l'usinage par découpe,

**caractérisé en ce que**

pendant l'irradiation avec le faisceau d'usinage (3), l'intensité ($I_p$) du faisceau d'usinage (3) à la position de vérification (21a, 21b) est augmentée et l'irradiation du faisceau d'usinage (3) est terminée dès qu'il est déterminé pendant la vérification que la partie de pièce (17) n'a pas été complètement séparée de la partie restante (19) lors de l'usinage par découpe.

2. Procédé selon la revendication 1, dans lequel la puissance (P) du faisceau d'usinage (3) est augmentée, notamment par paliers, lors de l'irradiation à la position de vérification (21a, 21b).

3. Procédé selon la revendication 2, dans lequel l'irradiation avec le faisceau d'usinage (3) est effectuée de manière pulsée à la position de vérification (21a, 21b) et dans lequel la puissance des impulsions (P1 à P5) est augmentée par paliers.

4. Procédé selon la revendication 3, dans lequel la puissance de chacune des impulsions (P1 à P5) est au moins doublée lors de l'augmentation par paliers.

5. Procédé selon l'une des revendications précédentes, dans lequel l'intensité (Ip) du faisceau d'usinage (3) à la position de vérification (21a, 21b) est augmentée par déplacement de la position de mise au point ($Z_F$) du faisceau d'usinage (3) en direction de la pièce (2).

6. Procédé selon l'une des revendications précédentes, dans lequel, pour vérifier si la partie de pièce (17) a été complètement séparée de la partie restante (19) lors de l'usinage par découpe, l'intensité ($I_{IR}$) du rayonnement détecté (27) est comparée à une valeur de seuil d'intensité ($I_{IR,S}$) et dans lequel l'irradiation avec le faisceau d'usinage (3) est terminée dès que la valeur de seuil d'intensité ($I_{IR,S}$) est dépassée.

7. Procédé selon l'une des revendications précédentes, dans lequel l'irradiation avec le faisceau d'usinage (3) à une position de vérification (21a, 21b) est effectuée à l'intérieur du contour de découpe (18a) prédéterminé, laquelle est espacée du contour de découpe (18a) prédéterminé et/ou d'un contour d'approche (20b) d'au moins la largeur de jeu de découpe (B) du contour de découpe (18a).

8. Procédé selon l'une des revendications précédentes, comprenant en outre les opérations suivantes : appliquer une impulsion de gaz (33a) à la position de vérification (21a, 21b) pour éjecter la partie de pièce (17) d'un plan d'appui (E), s'il est déterminé lors de la vérification que la partie pièce (17) n'a pas été complètement séparée de la partie restante (19) lors de l'usinage par découpe.

9. Machine d'usinage d'une pièce (2) par découpe, la machine comprenant :

une tête d'usinage (9) destinée à orienter un faisceau d'usinage (3) sur la pièce (2),
au moins un dispositif de déplacement (7, 11, 12) destiné à générer un mouvement relatif entre la tête d'usinage (9) et la pièce (2), et
un dispositif de commande (15) destiné à commander l'au moins un dispositif de déplacement (7, 11, 12) pour séparer une partie de pièce (17) d'une partie restante (19) par usinage par découpe de la pièce (2) suivant un contour de découpe (18a) prédéterminé,
un dispositif d'évaluation (28) qui est conçu pour vérifier si la partie de pièce (17) a été complètement séparée de la partie restante (19) pendant l'usinage par découpe,
comprenant en outre :

un détecteur (22) destiné à détecter un rayonnement (27) qui est généré par une interaction entre le faisceau d'usinage (3) et la pièce (2) et qui apparaît lorsque la pièce (2) est irradiée avec le faisceau d'usinage (3), de préférence pulsé, à une position de vérification (21a, 21b) dans le contour de découpe (18a) prédéterminé,
le dispositif d'évaluation (28) étant conçu pour vérifier à l'aide du rayonnement détecté (27) si la partie de pièce (17) a été complètement séparée de la partie restante (19) pendant l'usinage par découpe,
**caractérisée en ce que**
le dispositif de commande (15) est conçu pour augmenter l'intensité (Ip) du faisceau d'usinage (3) à la position de vérification (21a, 21b) et pour terminer l'irradiation avec le faisceau d'usinage (3) à la position de vérification (21a, 21b) dès qu'il est déterminé lors de la vérification que la partie de pièce (17) n'a pas été complètement séparée de la partie restante (19) lors de l'usinage par découpe.

10. Machine selon la revendication 9, qui comporte une source de faisceau (31) et dans laquelle le dispositif de commande (15) est conçu pour commander la source de faisceau (31), et augmenter en particulier par paliers la puissance (P) du faisceau d'usinage (3) lors de l'irradiation à la position de vérification (21a , 21b).

11. Machine selon la revendication 10, dans laquelle le dispositif de commande (15) est conçu pour commander la source de faisceau (31), d'irradier la position de vérification (21a, 21b) avec le faisceau d'usinage (3) de manière pulsée et d'augmenter par paliers la puissance des impulsions (P1 à P5) du faisceau d'usinage pulsé (3), la puissance de chacune des impulsions (P1 à P5) étant de préférence au moins doublée lors de l'augmentation par paliers.

12. Machine selon l'une des revendications 9 à 11, comprenant en outre : un dispositif de focalisation (32) monté dans la tête d'usinage (9) et un autre dispositif de déplacement (30) destiné à déplacer la tête d'usinage (9) dans une direction (Z) perpendiculaire à la pièce (2), le dispositif de commande (15) étant conçu pour commander le dispositif de déplacement supplémentaire (30) pour augmenter l'intensité (Ip) du faisceau d'usinage (3) à la position de vérification (21a, 21b) afin de déplacer la position de mise au point ($Z_F$) du faisceau d'usinage (3) en direction de la pièce (2) pendant l'irradiation de la position de vérification (21a, 21b) avec le faisceau d'usinage (3).

13. Machine selon l'une des revendications 9 à 12, dans laquelle le dispositif d'évaluation (28) est conçu pour comparer l'intensité ($I_{IR}$) du rayonnement détecté (27) à une valeur de seuil d'intensité ($I_{IR,S}$) afin de vérifier si la partie de pièce (17) a été complètement séparée de la partie restante (19) lors de l'usinage par découpe.

Fig. 1

Fig. 2

Fig. 3

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015080179 A1
- DE 102009049750 A1
- DE 102011004117 A1
- EP 3075485 A1